# EUROPÄISCHE PATENTSCHRIFT

(11) **EP 0 508 099 B1**
(45) Veröffentlichungstag und Bekanntmachung des Hinweises auf die Patenterteilung: **01.03.1995**
(21) Anmeldenummer: 92103710.7
(22) Anmeldetag: 04.03.1992
(51) Int. Cl.: H02G 15/18, H02G 15/013

(54) **Schrumpfbare Kabelmuffe für Kabel- oder Leitungsabzweige**
Retractable branch-off cable sleeve
Manchon de câbles rétractable pour branchements de câbles ou conduits

(30) Priorität: 18.03.1991 DE 4108810
(43) Veröffentlichungstag der Anmeldung: 14.10.1992
(73) Patentinhaber: RXS Schrumpftechnik-Garnituren GmbH, D-58093 Hagen (DE)
(72) Erfinder: Schölling, Rainer, W-5804 Herdecke (DE); Winterhoff, Hans, W-5840 Schwerte (DE)
(74) Vertreter: Fuchs, Franz-Josef, Dr.-Ing.

(56) Entgegenhaltungen:
- DE-A- 3 521 367
- GB-A- 2 079 072
- GB-A- 2 124 039
- GB-A- 2 220 532

## Beschreibung

Die Erfindung betrifft eine schrumpfbare Kabelmuffe für Kabel- oder Leitungsabzweige mit einer zweischenkligen Abzweigklammer im Ausführungsbereich zwischen den Kabeln, wobei die beiden Schenkel der Abzweigklammer auf der Außenseite der Kabelmuffe angeordnet sind und die beiden Schenkel der Klammer einen gestuften Schlitz bilden.

Aus der DE-B-PS 29 00 518 ist eine derartige schrumpfbare Kabelmuffe bekannt. Dort wird unter anderem eine zweischenklige Klammer verwendet, die einen gleichförmigen Schlitz aufweist, so daß darin die sich gegenüber liegenden Wandungen der Kabelmuffe zusammengepreßt werden können.

Aus der EP-A-0 094 242 - ist eine Klammer mit einem gestuften Schlitz bekannt, wobei die Breite des Schlitzes gleichbleibend ist. Der Schlitz bildet im wesentlichen eine langgestreckte U-Form, die dazu dient, daß die Klammer nicht abgleiten kann.

Aus der DE-A-33 41 618 - ist ein stirnseitiger Abschluß einer schrumpfbaren Kabelmuffe bekannt, bei dem im Inneren der Kabelmuffe zwischen den Kabeln ein Füllstück angeordnet ist. Über die Außenseiten der Kabelmuffe wird eine Klammer geschoben, damit die Muffenwandungen auf das Füllstück aufgepreßt werden. Bei Innendruck in der Kabelmuffe könnte jedoch die Gefahr bestehen, daß der Abschluß nach auswärts wandert und die Dichtung fehlerhaft wird.

Bei verschiedenen Anwendungsfällen ist jedoch eine erhöhte Dichtigkeitsforderung gegeben, so daß zusätzliche Maßnahmen vorgenommen werden müssen. Dies ist beispielsweise bei Kabel muffen mit Innendruck der Fall, da hierbei eventuell Schwierigkeiten durch Aufweiten des Dichtungsbereiches von innen her zu erwarten sind.

Aufgabe der Erfindung ist nun, bei einer schrumpfbaren Kabelmuffe einen Abzweig mit Hilfe einer Klammer zu schaffen, bei dem die erhöhten Dichtigkeitsforderungen, insbesondere bei Innendruck der Kabelmuffe erfüllt werden können. Die gestellte Aufgabe wird mit einer schrumpfbaren Kabelmuffe der eingangs erläuterten Art dadurch gelöst, daß der Schlitz am offenen Ende der Klammer einen weiten Dichtbereich aufweist, der zu einem inneren, engen Dichtbereich verengt ist und daß im weiten Dichtbereich der Klammer im Inneren der Kabelmuffe ein Füllstück angeordnet ist.

Die Vorteile der Erfindung sind nun in erster Linie darin zu sehen, daß im Dichtbereich der Kabelmuffe zwischen den abzweigenden Kabeln Maßnahmen getroffen sind, durch die die erhöhten Dichtungsforderungen, insbesondere bei Innendruck in der Kabelmuffe, erfüllt werden. So werden in diesem Dichtungsbereich zwei hintereinander liegende Abdichtungen vorgenommen. Die äußere Abdichtung erfolgt mit Hilfe eines engen Dichtungsbereiches, in dem der Schlitz zwischen den beiden Schenkeln der Klammer so eng ausgebildet ist, daß gerade die gegenüber liegenden Wandungen der Kabelmuffe mit eventuellen Beschichtungen zusammengeführt werden können. Bei Erwärmung schrumpft die Kabelmuffe und die Beschichtung schmilzt; dadurch nimmt die Stärke jeder Wandung zu und es erfolgt eine dichtende Pressung. Nach dem Abkühlen ist dann eine äußere Abdichtung hergestellt. Bei der Kabelmuffe gemäß der Erfindung erfolgt jedoch zusätzlich eine innere Abdichtung in einem zweiten Dichtbereich, zu dem der Schlitz zwischen den beiden Schenkeln kontinuierlich oder stufenförmig erweitert ist. Dadurch ergibt sich die Möglichkeit, daß hier im Inneren der Kabelmuffe zusätzlich Dichtungsmaterial angeordnet werden kann. So wird gemäß der Erfindung in diesem Bereich im Inneren der Kabelmuffe beispielsweise ein Füllstück angebracht, das vorzugsweise aus plastischem Dichtungsmaterial besteht. Als Dichtungsmaterial können die in der Kabeltechnik bekannten plastischen Dichtstoffe verwendet werden. Dieses plastische Dichtungsmaterial in Form eines Füllstückes wird dann zum Beispiel bei Innendruck gegen den äußeren, oben bereits beschriebenen Dichtbereich gepreßt, so daß die Dichtverhältnisse zusätzlich verbessert werden. Bei Bedarf kann ein solches Füllstück entweder ganz oder teilweise aus wärmeaktivierbarem Kunststoff bestehen, wobei dann die optimalen Dichtungsverhältnisse erst durch Erwärmen im Betriebsfall, das heißt bei Innendruck erreicht werden können. Dies ist auch bei Füllstücken mit Beschichtungen wie zum Beispiel aus Schmelzkleber der Fall.

Das Füllstück aus plastischem Material ist zweckmäßigerweise in handlichen Packungsformen enthalten und wird bei der Montage zwischen den Kabeln entsprechend angeformt. Das Füllstück kann jedoch auch in gewissen Grenzen bereits in angepaßten Formen vorgeformt sein, besonders dann, wenn das Füllstück aus wärmeaktivierbarem Material besteht oder wenn das plastische Dichtungsmaterial mit wärmeaktivierbarem Material beschichtet ist.

Die Erfindung wird nun anhand von zwei Figuren näher erläutert.
- Figur 1: zeigt eine Kabelmuffe im Abzweigbereich mit einer Klammer gemäß der Erfindung.
- Figur 2: zeigt einen Querschnitt der Kabelmuffe im Bereich der aufgesetzten Klammer.

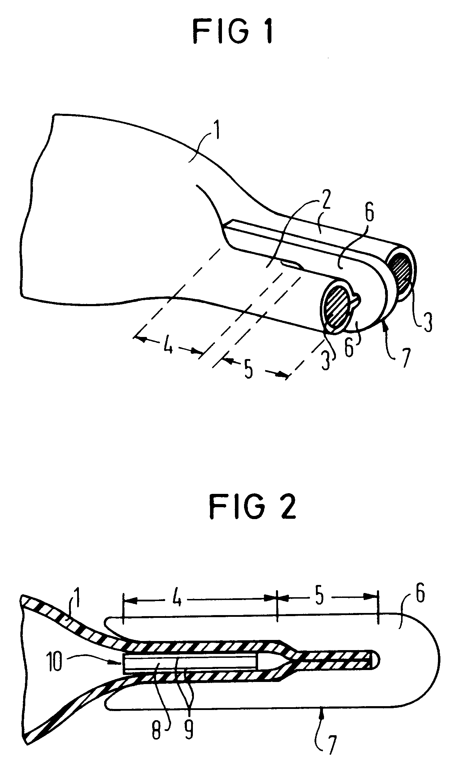

Die Figur 1 zeigt die Kabelmuffe 1 gemäß der Erfindung mit dem Verzweigungsbereich, bei dem beispielsweise zwei austretende Kabel 3 abgedichtet sind. Zwischen den beiden Kabeln 3 ist die Klammer 7 aufgeschoben, mit der die Bildung der Kanäle 2 für die Kabel 3 gebildet sind. Das Aufschieben der Klammer erfolgt vor dem Schrumpfvorgang. Aus der Figur ist weiterhin erkennbar, daß die Klammer 7 zwei hintereinander liegende Dichtbereiche 4 und 5 aufweist, wobei der Schlitz der Klammer 7 im Dichtbereich 5 am außen liegenden Ende der Anordnung sehr eng ist und nur die beiden gegenüber liegenden Wandungen der Kabelmuffe 1 so erfaßt, daß die beiden Schenkel 6 außen anliegen. An dem der eigentlichen Kabelmuffe 1 zugewandten Ende des Verzweigungsbereiches ist der durch die Schenkel 6 gebildete Schlitz im Dichtbereich 4 erweitert. Hier ist im Inneren ein zusätzliches, hier nicht sichtbares Füllstück 10 aus Dichtungsmaterial eingeführt.

Die Verhältnisse im Verzweigungsbereich der Kabelmuffe 1 werden anhand der Figur 2 erläutert, die ein Schnittbild der Kabelmuffe 1 im Klammerbereich zeigt. Daraus ist erkennbar, daß die Klammer 7 einen Schlitz mit einem Dichtbereich 5 kleiner Weite und mit einem weiteren Dichtbereich 4 größerer Weite aufweist, wobei der Übergang zwischen den beiden Dichtbereichen 4 und 5 kontinuierlich oder, wie hier gezeigt ist, stufenförmig verläuft. Dabei ist die Weite des Schlitzes im Dichtbereich 5 gerade so groß, daß die beiden gegenüber liegenden Wandungen der Kabelmuffe 1 mit eventuellen Beschichtungen aufgenommen werden können. Beim Schrumpfen nimmt jeweils die Stärke dieser Wandungen zu, so daß sich eine dichtende Verklemmung und eventuell Verklebung ergibt. Im zweiten, anschließenden und nach innen gerichteten Dichtbereich 4 hingegen ist die Weite des durch die Schenkel 6 gebildeten Schlitzes so groß, daß zusätzlich im Inneren der Kabelmuffe 1 ein Füllstück 10 aus geeignetem Dichtungsmaterial angeordnet werden kann. Vorzugsweise wird hier eine in der Kabeltechnik bekannte plastische Dichtungsmasse 8 verwendet, wie sie in Dichtbereichen und Kabeln eingesetzt wird. Diese Dichtungsmasse 8 ist zweckmäßigerweise noch mit einer klebenden Beschichtung versehen, zum Beispiel aus einem an sich bekannten Schmelzkleber, die bei Schrumpfwärme schmilzt und zusätzlich abdichtet. Die Dichtungswirkung ist besonders gut bei Verwendung in Dichtungsbereichen von Druckmuffen, da das Füllstück 10 durch den herrschenden Innendruck gegen den klebergebundenen, engen Dichtungsbereich 5 gedrückt wird; wodurch die Dichtigkeit zusätzlich erhöht wird.

Die Klammer 7 besteht vorzugsweise aus gut wärmeleitendem Material, wie zum Beispiel aus Metall, um die Wärmezufuhr für die wärmeaktivierbaren Dichtungsmittel im Inneren zu begünstigen.

## Patentansprüche

1. Schrumpfbare Kabelmuffe (1) für Kabel- oder Leitungsabzweige mit einer zweischenkligen Abzweigklammer (7) im Ausführungsbereich zwischen den Kabeln (3), wobei die beiden Schenkel (6) der Abzweigklammer (7) auf der Außenseite der Kabelmuffe (1) angeordnet sind und die beiden Schenkel (6) der Klammer (7) einen gestuften Schlitz bilden,
**dadurch gekennzeichnet**,
daß der Schlitz am offenen Ende der Klammer (7) einen weiten Dichtbereich (4) aufweist, der zu einem inneren, engen Dichtbereich (5) verengt ist, und daß im weiten Dichtbereich (4) der Klammer (7) im Inneren der Kabelmuffe (1) ein Füllstück (10) angeordnet ist.

2. Schrumpfbare Kabelmuffe nach Anspruch 1,
**dadurch gekennzeichnet,**
daß der innere, enge Dichtbereich (5) der Klammer (7) die Weite der doppelten Kabelmuffenwandung und deren Beschichtungen aufweist.

3. Schrumpfbare Kabelmuffe nach einem der vorhergehenden Ansprüche,
**dadurch gekennzeichnet**,
daß das Füllstück (10) aus plastischem Material (8) besteht.

4. Schrumpfbare Kabelmuffe nach Anspruch 3,
**dadurch gekennzeichnet,**
daß das plastische Material (8) des Füllstückes (7) mit einem Kleber (9), vorzugsweise mit einem bei Wärme aktivierbaren Schmelzkleber, beschichtet ist.

5. Schrumpfbare Kabelmuffe nach einem der Ansprüche 1 bis 2,
**dadurch gekennzeichnet,**
daß das Füllstück (10) aus wärmeaktivierbarem Material, vorzugsweise aus einem bei Schrumpftemperatur schmelzenden Schmelzkleber, besteht.

6. Schrumpfbare Kabelmuffe nach einem der vorhergehenden Ansprüche,
**dadurch gekennzeichnet**,
daß das Füllstück (10) Ausformungen für die Aufnahme der Kabel aufweist.

## Claims

1. Shrinkable cable sleeve (1) for cable or line junctions having a two-limbed area junction bracket (7) in the passing-out area between the cables (3), the two limbs (6) of the junction bracket (7) being arranged on the outside of the cable sleeve (1) and the two limbs (6) of the bracket (7) forming a stepped slot, characterized in that the slot has a large sealing area (4) at the open end of the bracket (7), which sealing area is narrowed to form an inner, narrow sealing area (5), and in that a filler (10) is arranged in the large sealing area (4) of the bracket (7) inside the cable sleeve (1).

2. Shrinkable cable sleeve according to Claim 1, characterized in that the inner, narrow sealing area (5) of the bracket (7) has the width of twice the cable sleeve wall and its coatings.

3. Shrinkable cable sleeve according to one of the preceding claims, characterized in that the filler (10) comprises plastic material (8).

4. Shrinkable cable sleeve according to Claim 3, characterized in that the plastic material (8) of the filler (10) is coated with an adhesive (9), preferably a hot-melt adhesive which can be activated when it is hot.

5. Shrinkable cable sleeve according to one of Claims 1 and 2, characterized in that the filler (10) comprises a material which can be activated when hot, preferably a hot-melt adhesive which melts at shrinking temperature.

6. Shrinkable cable sleeve according to one of the preceding claims, characterized in that the filler (10) has deformations for accommodating the cables.

## Revendications

1. Manchon rétractable (1) pour dérivation de câble ou de ligne comportant une agrafe (7) de dérivation à deux branches dans la zone entre les câbles (3), les deux branches (6) de l'agrafe (7) de dérivation étant disposées sur l'extérieur du manchon (1) de câble et les deux branches (6) de l'agrafe (7) formant une fente étagée,
caractérisé par le fait que, à l'extrémité ouverte de l'agrafe (7), la fente présente une zone d'étanchéité large (4) qui se rétrécit en une zone d'étanchéité étroite (5) intérieure et qu'une pièce intercalaire (10) est placée à l'intérieur du manchon (1) de câble dans la zone d'étanchéité large (4) de l'agrafe (7).

2. Manchon de câble rétractable selon la revendication 1,
caractérisé par le fait que la zone d'étanchéité étroite (5) intérieure de l'agrafe (7) a la largeur de la double paroi de manchon rétractable et de ses revêtements.

3. Manchon de câble rétractable selon l'une des revendications précédentes,
caractérisé par le fait que la pièce intercalaire (10) est en matière plastique (8).

4. Manchon de câble rétractable selon la revendication 3,
caractérisé par le fait que la matière plastique (8) de la pièce intercalaire (10) est recouverte d'un adhésif (9), de préférence une colle fusible activable à la chaleur.

5. Manchon de câble rétractable selon l'une des revendications 1 à 2,
caractérisé par le fait que la pièce intercalaire (10) est en matière thermoactivable, de préférence une colle fusible fondant à la température de retrait.

6. Manchon de câble rétractable selon l'une des revendications précédentes,
caractérisé par le fait que la pièce intercalaire (10) présente des formes extérieures destinées à recevoir les câbles.
